# EUROPEAN PATENT SPECIFICATION

(11) **EP 4 372 068 B1**
(45) Date of publication and mention of the grant of the patent: **03.09.2025**
(21) Application number: 23209860.8
(22) Date of filing: 14.11.2023
(51) Int. Cl.: C10B 53/02, C10B 49/04, C10B 49/08, C10B 51/00, C10B 7/10

(54) **PLANT AND PROCESS FOR TREATING ORGANIC MATERIAL BY PYROLYSIS**
ANLAGE UND VERFAHREN ZUR BEHANDLUNG VON ORGANISCHEM MATERIAL DURCH PYROLYSE
INSTALLATION ET PROCÉDÉ DE TRAITEMENT DE MATIÈRE ORGANIQUE PAR PYROLYSE

(30) Priority: 15.11.2022 IT 202200023481
(43) Date of publication of application: 22.05.2024
(73) Proprietor: Consorzio per la Ricerca e la Dimostrazione sulle Energie Rinnovabili, 50038 Scarperia e San Piero (FI) (IT)
(72) Inventor: Chiaramonti, David, Scarperia e San Piero (FI) (IT); Miliotti, Edoardo, Scarperia e San Piero (FI) (IT); Rizzo, Andrea Maria, Scarperia e San Piero (FI) (IT)
(74) Representative: Nesti, Antonio

(56) References cited:
- US-A1- 2016 244 674
- US-A1- 2018 119 019

## Description

### Sector of the Invention

The invention concerns a plant and a process for treatments by pyrolysis, i.e. by thermal decomposition of organic material, for example a biomass, in the absence of oxygen inside a special apparatus called a pyrolyser.

In particular, the invention concerns a plant and a method for implementing an oxidative or autothermal pyrolysis process, i.e. in the presence of limited amounts of oxygen, by means of a pyrolyser of the auger type.

### State of the art

It is known that the pyrolysis process consists of the thermal decomposition of organic material in the absence of oxygen.

The main products of the process are a carbonaceous solid (char) and vapours with a high content of organic substances derived from the thermal decomposition of the organic material (pyrogas).

These vapours can be condensed to obtain a liquid fraction normally called bio-oil (or pyrolysis oil) from which to obtain a liquid fuel or products with high added value. A fraction of the vapours produced within the reactor is composed of non-condensable gases mainly carbon monoxide (CO), carbon dioxide (CO₂), methane (CH₄) and hydrogen (H₂). The yield of the products varies depending on the reaction conditions, in particular temperature and residence time in the reactor. Pyrolysis is generally classified based on the operating conditions of the process into fast, intermediate and slow.

Table 1 compares the main operating parameters and the typical yields of the products of the three types of pyrolysis.

**Table 1: Typical conditions of reaction and of the yields of products for slow, intermediate and fast pyrolysis in the case of lignocellulosic biomass.**

| | **Fast Pyrolysis** | **Intermediate Pyrolysis** | **Slow Pyrolysis** |
|---|---|---|---|
| Temperature | 300-1000 °C | 300-450 °C | 300-550 °C |
| HR | From 10 up to 1000 °C s⁻¹ | 200-300 °C min⁻¹ | <50 °C min⁻¹ |
| Residence time | < 2 s | ~10 min | >1 h |
| Yield of the liquid (bio-oil) [wt.%] | 60-75% | 35-50% | 20-50% |
| Yield of the solid (char) [wt.%] | 10-25% | 25-40% | 25-35% |
| Non-condensable gas yield [wt.%] | 10-30% | 20-30% | 20-50% |

Fast pyrolysis is therefore characterised by high heating rates, even high temperatures and low residence times of the hot vapours, so as to maximise the liquid yield. On the contrary, slow pyrolysis is distinguished by low heating rates, moderate temperatures and high residence times of the hot vapours, so as to promote the production of char. Finally, intermediate pyrolysis combines prolonged residence times of the hot vapours in the reactor and moderate heating rates so as to obtain a combined production of char and bio-oil.

To implement the pyrolysis process there are different types of reactor, or pyrolyser that can be chosen depending on the application, the material treated and the desired characteristics of the products obtained.

In particular, fixed bed or "moving bed" static reactors are known in which the movement of the treated material can take place fluid-dynamically (fluid bed) or mechanically (rotary kiln or auger reactor).

The auger reactors of known type use a helical screw to move the biomass inside the reactor and, unlike the fluid bed reactors, have a simpler design and are also suitable for small-scale applications.

In this type of reactors, typically cylindrical in shape, the biomass is inserted from one end through a volumetric loading system, also called "feeder", and is subsequently transported along the axis of the reactor, thanks to the rotation of the screw or auger by means of a motor. The biomass can be heated upon contact with the walls of the reactor, maintained at high temperatures thanks to the heat provided by electric heaters (indirect heating), or by the combustion of the pyrolysis gases themselves (direct heating) or by another energy carrier specially introduced into the reactor, previously heated externally or internally (through processes such as the electrical induction).

The non-condensable gases and the pyrolysis vapours are extracted from the reactor and the char produced is collected at the opposite end, usually by gravity. The movement of the screw also favours the mixing of the biomass particles and the contact with the walls, increasing the heat transfer.

The auger reactors have significant advantages that make them an industrially attractive choice. Among them, the main advantages lie in the accurate control of the flow rate of the biomass and of the residence time in the reactor, the simplicity of the separation of the solid fraction from the gases produced by the reaction, in the fact that the pyrolysis gases obtained are less diluted than in a fluid bed reactor, in addition to the high flexibility in choosing the dimensions and characteristics of the input material and the design, operation and maintenance simplicity.

However, the current auger reactors also have significant limitations, such as the high residence time of the produced pyrolysis gases inside the reactor compared to fluid bed reactors, the mechanical wear of the moving parts at high temperature, and the difficulties of obtaining an efficient heat transfer to the treated biomass.

It is also known that when the heat necessary for pyrolysis is provided by the partial oxidation of the biomass itself and of the pyrolysis products, the pyrolysis becomes a process called oxidative or autothermal pyrolysis.

Pyrolysis occurs in this case in the presence of a limited oxygen concentration.

By providing heat internally to the reactor, the limitations on heat transfer towards the biomass from the outside through the surfaces of the system are eliminated. In general, it is therefore acknowledged that the autothermal pyrolysis has the considerable advantage of simplifying the configuration of the plant (reducing heat exchangers, combustors) and of increasing the scalability of the heating process. The autothermal configuration also allows to increase the performance of the plant in terms of incoming biomass flow rate, and for this reason it is considered a process intensification system.

Currently, the oxidative pyrolysis is mainly used in fixed bed reactors and in some fluid bed applications in which the fluidization of the bed takes place through the injection of a gas through a porous plate and the addition of a small fraction of oxygen in the gas that allows to increase the coefficient of heat exchange with the biomass by providing the heat necessary to make the pyrolysis process autothermal. At present, the oxidative pyrolysis has not found application in plants using auger reactors, this is due to the technical difficulty of inserting air or oxygen directly into an auger reactor, both due to the established practice of performing the pyrolysis processes in inert environments that are not partially oxidative, and due to the difficulties of ensuring a suitable heat exchange between hot gases and biomass in a reactor of this type, i.e. an auger reactor.

From document US20160244674 a pyrolytic auger reactor is known inside which the solid component is "packed" in a section of the reaction chamber completely filled, with the volatile matters and the water generated during the pyrolysis that are recirculated. In this example, the oxidizing agent, air, is inserted, air, through radial appendages of the axis of the auger at predefined points close to the solid generating a flow of syngas in countercurrent to that of the biomass.

From document US20180119019 a further example of reactor is known which is provided with an auger for advancing the solid in the pyrolysis chamber, which is operated to obtain the filling of the chamber and the packing of the solid, inside which the injection of an oxidizing agent takes place along the walls of the reactor at several points located on the surface in the second terminal half of the length of the reactor, generating a gas flow in countercurrent to that of the biomass.

Also these solutions have significant limits, in particular because the feeding of the solid until compaction and the injection of oxidant directly or close to the compacted solid mass results in a high residence time, greater risk of cracking of the liquid products and the onset of heterogeneous reactions, in addition to the fact that the oxidation step of the pyrolysis solid reduces the yield of the plant in terms of char production.

### Object of the invention

With the present invention it is therefore intended to overcome the drawbacks of the already known solutions and to propose a method and a pyrolizer apparatus that implement a process for the oxidative pyrolysis of organic material, preferably a biomass, by means of a reactor of the hollow auger type, i.e. an auger without a central shaft in order to obtain in the reactor a controlled oxidation process between the introduced air and the pyrolysis vapours and gases and that shows a high char production efficiency.

### Summary of the invention

The realization of a method and a plant for treating organic material by pyrolysis according to the appended claims have allowed to achieve these aims, wherein there is provided a controlled blowing of an oxidizing agent (for example air) in one or more points inside the reactor obtained by means of a perforated lance that is independent and coaxial with respect to the material advancement auger, provided with an axial distribution of holes for the injection of an oxidizing agent inside the reaction chamber in contact with the pyrolysis gases and vapours.

A first advantage consists in the high efficiency of the heat exchange between the treated material particles and the surface of the reactor.

A further advantage consists in the high uniformity of the heating of the treated material obtained along the axis of the reactor.

A still further advantage consists in the high versatility of the process and of the plant in terms of both treatable material and reachable operating conditions, allowing for example to vary the residence time of the solids inside the reactor by adapting the rotation speed of the auger, for example from a few minutes to more than 1 hr.

A further advantage of the proposed solution with respect to for example rotary kiln reactors lies in the fact that the cylinder of the reactor does not rotate, but the material is moved by the movement of the auger. This allows to reduce the problems related precisely to the large-sized rotating seals on the drum, which must guarantee a barrier to the unwanted and controlled entry of air/oxygen into the reactor, which is at a high temperature.

A still further advantage consists in stirring the treated material and therefore the high consistency and predictability of the characteristics of the products obtained.

A still further advantage consists in the possibility of adjusting in a precise manner the flow rate and the point of introduction of the oxidizing agent (for example air) introduced into the reactor in order to promote the oxidative pyrolysis process.

A still further advantage consists in the possibility of controlling the degree of oxidation of the treated material and of the pyrolysis vapours.

A still further advantage consists in the possibility of sampling the pyrolysis vapours at several points along the axis of the reactor, instead of exclusively at the end of the reactor, minimising their residence time inside the reactor and thus being able to limit the onset of secondary reactions.

A still further advantage consists in the possibility of controlling the distribution of the thermal energy provided by the partial oxidation of the treated material.

A still further advantage consists in increasing the flow rate of treated material that can be fed in input to the reactor when the system operates in oxidative mode compared to the conventional mode, thanks to said controlled distribution of the oxygen and therefore of the thermal energy provided to the material, as well as to the modes adopted to introduce the oxidizing agent into the reactor.

An even further advantage consists in the increase in the flow rate of the products obtained.

An even further advantage consists in the reduced sizes of the plant with the same flow rate compared to the conventional plants.

Yet, a further advantage consists in limiting the oxidation of the char since the oxidant is inserted in the part of the volume where the pyrolysis gases are usually present, thus favouring the homogeneous oxidation reactions (oxidation of the pyrogas) compared to the heterogeneous ones (oxidation of the char), preserving the char mass yield.

Yet, a further advantage consists in the possibility of modifying the points of insertion of the oxidizing agent.

### List of drawings

These and other advantages will be better understood by any person skilled in the art from the following description and the accompanying drawings, given as a nonlimiting example, in which:

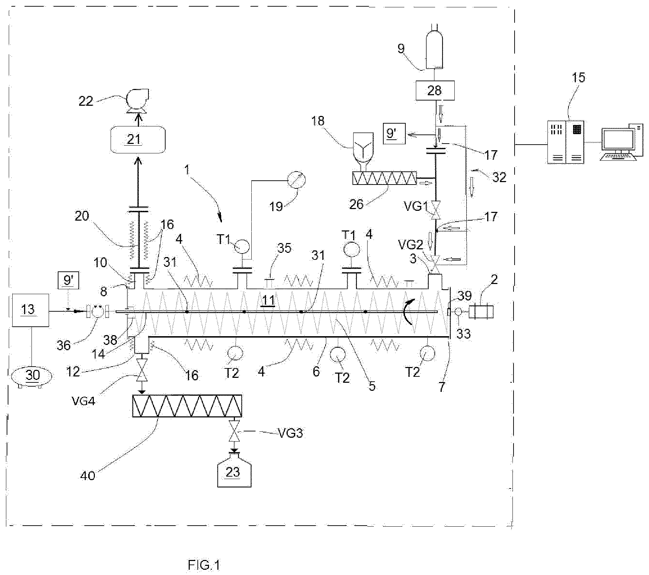

- fig.1 schematically shows a pyrolyser plant according to the invention;
- fig.2 schematically shows a hollow-axis auger according to the invention;
- fig.3 shows a perforated lance of a plant according to the invention;
- fig.4 shows a sectional view of a pyrolysis chamber of the plant of the invention with the structure of the advancement auger and of the oxidizing agent (e.g. air) blowing lance highlighted.

### Detailed description

With reference to the attached drawings, a plant for treating organic material by pyrolysis according to the invention is described.

The plant comprising a reactor 1 inside which an advancement auger 5 can rotate, preferably made of stainless steel, moved in rotation at a speed controlled by a motor 2 inside a process chamber 11 delimited by a metal casing 6 and heated by suitable heating means 4, for example electrical resistors arranged in order to promote a heating of the chamber by zones. By way of example, three resistors may be provided which are configured to ensure either a uniform and equal temperature over the three zones concerned, or three different temperatures for the three zones.

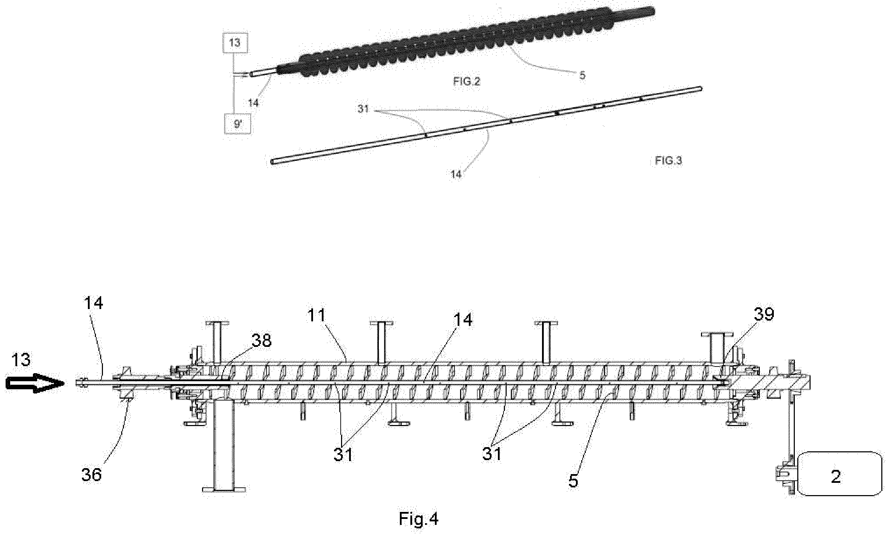

More in detail, as better evident from fig. 4, the auger 5 is an auger without a central shaft and has at the ends two supports 38, 39 of which the second one is mechanically connected to the motor 2 that allows the transmission of the motion. The auger may be provided with specific elements connected to it, capable of favouring the stirring of the material in the reactor. Said elements may also be consistently arranged with similar elements in the inner surface of the cylindrical reactor, always in order to further favour a suitable stirring.

According to the invention, the plant comprises oxidizing agent (for example air) blowing means 13 communicating at the inlet with a oxidizing agent (for example air) source 30, for example a compressor controlled by a control unit 15 and at the outlet with a distribution of points 31 of introduction of a controlled amount of oxidizing agent (for example air) at a sub-stoichiometric value inside said process chamber 11 in order to promote a partial and controlled oxidation process between the introduced oxidizing agent and the pyrolysis vapours and gases.

To this end, the feed of the material to be treated, the speed of the auger and the exit of the solid from the reactor are adjusted so as not to cause the complete filling of the chamber and allow the oxidising agent exiting the holes 31 to come into contact mainly with the pyrolysis gases and vapours and not with the solid component.

In the example described, the blowing means comprise in particular a pipe or perforated lance 14, better represented in figures 2-4, arranged coaxially to the auger 5 and independent of it being able to rotate inside the supports 38, 39 and fixed to a joint 36 that allows to keep it stationary even during the rotation of the auger.

The casing 6 of the process chamber is also preferably made of stainless steel, is wrapped by a layer of a thermal insulating material, for example rock wool, and extends from an initial end 7 to a final end 8 of the process chamber where the extraction points of the pyrolysis products are located.

Preferably, for the control of the rotation speed, the auger is connected to the motor 2 by means of a gear motor and a sensor 33 is also provided to monitor the rotation speed of the auger which allows the modulation of its rotation speed, allowing the residence time of the material inside the reactor to be varied in a time interval that can vary from a few minutes to just over 1 hr. The adjustment of the rotation speed of the auger can take place by means of an inverter coupled to the motor 2, or mechanical rev variator.

Advantageously, the adjustability of the rotary movement of the auger allows a stirring of the treated material, for example biomass, favourable to the heat exchange between the particles of the same and the surface of the reactor, ensuring a more uniform heating along the axis of the same and at the same time to study the effects of the speed of rotation, and therefore of advancement of the material, on the yield and composition of the pyrolysis products, both vapours and solids.

To this end, it can also be provided for one or more sampling points 35 along the process chamber so as to be able to extract and possibly use and analyse the pyrolysis gas, one or more pressure sensors 19 to monitor the internal pressure of the reactor, and a temperature sensor distribution T1, T2 to monitor the temperature of the metal casing and the temperature of the vapours and gases inside the process chamber. The presence of several gas extraction points allows to obtain some advantages, including: limiting the overpressure in the reactor, allowing an easier disposal of the flow rate of vapours and gases; limiting the contact between char and vapours, thus limiting the effects of the secondary reactions; improving the quality of the solid product.

Advantageously, the monitoring of the process can be carried out through a control unit 15 connected to the sensors T1, T2, to the sampling analysis instrumentation, to the heating system 4 (consisting indifferently of resistors or inductors), and to the motor 2 of the auger 5, in order to be able to continuously adjust the heating means and the rotation speed of the auger according to the temperatures detected by the sensors T1-T2 and of the remaining data acquired, for example of the chemical-physical characteristics of the gaseous products extracted at different points of the process chamber or of the pyrolysis solids obtained at the end of the process.

In the illustrated embodiment, the material to be treated is fed by a feed 18 and introduced with a controlled flow rate to an inlet point 3 in the reactor located in proximity to the first end 7 of the chamber.

Preferably, the material to be treated is introduced into the reactor through a doser 26, for example a screw doser connected to the inlet 3, which is also connected to the control unit 15.

A controlled flow of an inert gas, for example nitrogen, is also introduced into the inlet 3, in co-current with the flow of the organic material to be treated, coming from a feed 9, for example a nitrogen cylinder, and passing through a flow regulator 28 possibly connected to the control unit 15.

Preferably, the feed of the process with inert gas comprises a distribution of injection points 17 arranged along the line 32 of the inerting gas, possibly communicating with the perforated lance 14 through an inlet point 9'.

In the illustrated example, the injection points 17 are arranged between the feed 9 and the inlet 3 in the reactor of the material between two valves VG1, VG2 which are installed so as to ensure the creation of a watertight chamber that will be inertized before proceeding with the introduction of the material to be treated into the reactor.

At the end 8 of the chamber 11 there is a first outlet 10 for extracting pyrolysis vapours and gases from the reactor which preferably communicates with an extraction pipe 20 comprising further heaters 16 in order to avoid a possible condensation of the pyrolysis vapours which are extracted by means of an extraction fan 22 placed downstream of a condensation unit 21.

Advantageously, the fan 22 can also be configured to create a slight depression in the reactor 1 and to ensure that the pyrolysis vapours/gases can be continuously extracted from the reactor and in a controlled manner from the different pyrogas extraction points.

In proximity to the terminal end 8 of the chamber 11 there is also arranged a second outlet 12 for extracting the solid char produced by the pyrolysis process, preferably a tank 23 for collecting by fall said solid pyrolysis products, by opening an electropneumatic valve VG3.

In a preferred embodiment example, in order to improve the safety of the plant, the char collection is carried out in "batch mode", that is, not continuously but when the appropriate conditions occur. In particular, it is known that the hot char can only be considered safe at limited temperatures, generally below 65° C, for which the finer powders, if at a higher temperature, could catch fire on contact with air. For this reason, in the process described, the char produced by the pyrolysis section and continuously accumulated in the discharge tank, is allowed to cool (according to various technological and process solutions, from simply keeping in the tank for a suitable time, to introducing inert gas at low temperature, to liquid cooling) inside the tank for a period of time such as to make its subsequent transport and storage safe. In the operation of the illustrated plant, the organic material to be treated, for example a biomass, is introduced into the reactor through the screw doser 26 which is connected to the reactor 1.

Through the flow of nitrogen, coming from the cylinder 9, it is proceeded, if necessary, with the inertization of the reaction atmosphere.

The biomass then enters the heated reactor 1 from the inlet point 3 and is moved forward along its axis by the auger 5 moved in rotation by the motor 2.

Through a suitable choice of the number, diameter and arrangement of the holes 31 on the lance 14 and through a flow controller, for example of the mass-thermal type, which interfaces directly with the control system 15, it is possible to adjust the flow rate of oxidizing gas, for example air.

The axial position of the perforations on the injection lance determines the section of reactor involved in the oxidative conditions; therefore, by varying the axial position of the air injection it is possible to realize arbitrary combinations of anoxic/oxidizing treatment durations on the pyrolysed material. For example, a first phase of anoxic treatment can be followed by a second phase of treatment in the presence of oxidant, directly affecting the properties of the material produced as a result of the treatments. The possibility of introducing the oxidizing agent (e.g. air) inside the reactor implies greater flexibility compared to systems in which the oxidizing agent (e.g. air) is introduced by one or more lances that cross the walls of the reactor, as the latter are constrained in position (same axial coordinate of introduction), while the lance system allows the axial coordinate of introduction to be varied without changing the structure of the reactor.

The number and the width of the perforations is determined by the: pressure of introduction of the oxidizing agent and by the desired flow rate of oxidizing agent into the reactor.

The adjustment of the flow rate of the oxidizing agent is finally determined on the basis of the elemental composition of the processed material (carbon, oxygen, hydrogen, nitrogen, sulfur) and of the flow rate of the processed material; equivalence ratio (air flow rate/stoichiometric air) desired.

Advantageously, the plant operates in an autothermal mode thanks to the fact that the amount of oxidizing agent at a sub-stoichiometric value inserted in the reactor allows the partial combustion of the pyrolysis vapours/gases in a limited and controlled manner, with the development of the heat necessary to feed the pyrolysis process without the need for external thermal energy input and at the same time without significantly reducing the flow rates of pyrolysis gases and solids obtained at the end of the process.

The geometry and the mode of operation of the auger pyrolysis plant therefore presents a significant advantage for the development of the oxidative pyrolysis process because the oxidizing agent can be introduced at certain points and in the desired amount into the reactor by exploiting the perforated introduction lance 14 ensuring an almost unchanged yield of the char at the end of the process.

The internal atmosphere of the process chamber of the reactor can be maintained inert thanks to the introduction of a certain flow rate of nitrogen from the points 17 and/or 31 of the lance 14 which will also act as a fluidizing gas, directing the pyrolysis vapours and gases towards the extraction points 35 which thus allow to locally study the effects of the variation of the flow rate and of the residence times of the vapours in order to guarantee the maintenance of a residence time of the hot vapours corresponding to a slow pyrolysis process and to promote the secondary pyrolysis reactions with further formation of char and pyrolysis gas.

The pyrolysis vapours and gases produced are then conveyed by the nitrogen (or other inert) flow rate, and in the case of oxidative pyrolysis also by the oxidizing agent, towards the condensation unit 21 through the heated and insulated piping 20 and from here extracted thanks to the pressure difference generated by the fan 22. The solid products i.e., in the case described, the char obtained from the biomass pyrolysis process, are instead conveyed by a specific extraction system, for example a screw system 40, inside the sealing tank 23 through the opening of electropneumatic valves VG4, VG3 respectively upstream and downstream of the extraction system 40.

In a preferred embodiment, the plant is configured to implement a process in which, indicatively, the pyrolysis takes place at a temperature between 300 °C and 650 °C, with a heating rate preferably of less than 50 °C / min and with a residence time of the biomass in the reactor of maximum 60 min.

The system and the process described achieve important advantages.

In particular, the lack of a central shaft of the auger allows inserting a lance or similar system into the reactor with a series of perforations placed at a predetermined distance through the entire length of the reactor that allow nitrogen or oxidizing agent to be inserted into the reactor itself and thus be able to condition the process in progress in the reactor. By varying the perforations of the lance it is further possible to introduce air or oxygen at different points, and by varying the diameter of the same in combination with the characteristics of the feed fan, with different speeds and flow rates.

As described above, the introduction of a small percentage of oxidizing agent into the reactor (under sub-stoichiometric conditions) allows in fact to provide the heat necessary for the pyrolysis process through the oxidation of the organic vapours produced and of a small part of the pyrolysis char. In this way, the pyrolysis process becomes autothermal and the heaters of the reactor only have to provide the energy needed to overcome the thermal losses of the reactor to the outside.

This feature represents a considerable advantage compared to the plants and to the processes of known type, in which the main limitation to the application of the pyrolysis process on an industrial scale is given by the limit imposed by the heat exchange with the biomass inside the reactor. The conventional auger reactors, in fact, are heated externally through electrical resistors or by means of a heat transfer fluid (diathermic oil, combustion fumes, etc.) and the treated material is then heated indirectly. The external heat source must therefore first heat the entire surface of the reactor which then transfers the heat internally to the biomass mainly by conduction. Therefore, the available heat exchange surface is thus the limiting factor for the capacity of the reactor.

On the contrary, through the direct autothermal heating inside the reactor it will therefore be possible, with the same volume of the reactor, to insert a greater amount of material to be treated increasing the flow rate of the feed system and, consequently, of products, thus making the process potentially scalable with a reduction in the operating costs and a better feasibility.

The insertion of the oxidizing agent into the reactor through a specially perforated lance also allows a better adjustment of the oxidation, in fact by varying the position and the size of the holes it is possible to adjust the amount of oxidizing agent to be inserted into the reactor in each zone of the reactor as well as the speed of introduction and therefore the penetration of the jet. This greater flexibility therefore allows, for example, to provide more air or oxygen in the zones with the higher temperature, thus adjusting the oxidation of the treated material and of the vapours inside the reactor and varying the process temperatures in the reactor.

The introduction of the oxidizing agent through a lance passing through the entire length of the reactor also allows the configuration of the holes to be varied according to the operating conditions simply by replacing the lance with one having a different arrangement and diameter and/or number of the holes. Depending on the type of material treated, it will be in fact necessary to vary the reaction temperature and consequently to vary the amount of oxidizing agent to be inserted and the position and size of the supply holes.

The lance passing through the centre of the reactor coaxially to the auger also allows the oxidizing agent to be inserted in proximity to the moving bed of treated material. In this way, the flame will form in proximity to the bed, distributing the thermal energy necessary for the reaction more evenly over the material and avoiding any dispersion in the volume of the reactor.

The invention has been described with reference to a preferred embodiment, but it is understood that equivalent modifications may be made without in any case departing from the scope of protection granted to this industrial patent, as defined in the appended claims.

## Claims

1. . Plant for treating organic material by pyrolysis, comprising a reactor (1) comprising
a pyrolytic process chamber (1 1) delimited by a casing (6) and extended from a first end (7) to a second end (8),
an inlet point (3) in the reactor of a controlled flow rate of organic material to be treated coming from a feed (1 8), located in proximity to said first end (7),
an auger (5) for advancing the organic material to be treated from said first end to said second end of said chamber (11), moved in rotation inside the chamber (11) by a motor (2),
a feed (9) of a controlled flow of an inert gas from said first end to said second end of said chamber (11),
a first outlet (10) for extracting pyrolysis vapours and gases from the reactor located in proximity to said second end (8),
a second outlet (12) for extracting solid pyrolysis products from the chamber (11) located in proximity to said second end (8),
a temperature sensor distribution (T1-T2) to monitor the temperature of the vapours inside the process chamber (1 1) and/or the temperature of the metal casing (6) inside the reactor,
heating means (4) for said chamber (11),
a control unit (15) to adjust said heating means according to the temperatures detected by at least one of said sensors (T1 -T2),
oxidizing agent blowing means (13, 14) communicating with an oxidizing agent source (30) external to the chamber (11) and with blowing points (31) internal to the reactor to introduce a controlled amount of oxidizing agent into said process chamber (11,)
wherein said blowing means comprise a hollow-axis auger (5) inside which a perforated lance (14) is coaxially arranged extending along the entire length of said chamber (11) and provided with a distribution of holes (31) in order to promote a controlled oxidation process between the introduced air and the pyrolysis vapours and gases.

2. . Plant according to claim 1, wherein said lance (14) is mounted independently of the rotation of said auger (5).

3. . Plant according to claim 1, or 2 wherein said lance (14) is removably and interchangeably mounted.

4. . Plant according to one of the preceding claims, wherein along the reactor there are a plurality of sampling points (35) for the pyrolysis gas.

5. . Plant according to one of the preceding claims, comprising further heaters (16) installed at said terminal end (8) of the reactor in order to avoid a possible condensation of the extracted pyrolysis vapours.

6. . Plant according to one of the preceding claims, wherein said feed (9) of inert gas comprises a distribution of injection points (17) arranged between said feed (9) and said inlet point (3) for the material to be treated in the reactor.

7. . Plant according to one of claims 2-6, wherein said feed (9) of inert gas comprises a connection (9') to said blowing points (31) inside the reactor of said pipe (14).

8. . Plant according to one of the preceding claims, comprising a heated and thermally insulated pipe (20) for conveying the pyrolysis vapours and gases to a condensing unit (21).

9. . Plant according to one of the preceding claims, comprising an extraction fan (22) for the vapours and gases located downstream of said condensing unit.

10. . Plant according to one of the preceding claims, comprising a system for conveying and collecting (23) said solid pyrolysis products.

11. . Process for the pyrolysis of an amount of organic material by means of an auger reactor according to one of claim 1-10, comprising the following steps:
rotating said auger at a controlled speed
introducing into the reactor a controlled flow rate of said organic material to be treated,
introducing a controlled flow of said inert gas into a process chamber of the reactor,
extracting said pyrolysis vapours and gases from the chamber,
extracting said solid pyrolysis products from the chamber,
monitoring at least the temperature of the vapours inside the process chamber,
heating said chamber to a controlled temperature according to the detected temperatures of the vapours,
**characterized in that**
said auger (5) and said feed (9) of inert gas promote co-current flows of organic material and of inert gas with partial filling of the solid material in the chamber (11)
and by further providing for a step of blowing into said chamber a controlled amount of oxidizing agent at a sub-stechiometric value thus promoting a controlled partial oxidation process between the introduced oxidizing agent and the pyrolysis vapours and gases.

12. . Process according to claim 11, wherein said organic material is a biomass and said pyrolysis process takes place at a temperature between 300 °C and 650 °C, with a heating rate of less than 50 °C/min and with a maximum residence time of the biomass in the reactor of maximum 60 min.

## Patentansprüche

1. Anlage zur Behandlung von organischem Material durch Pyrolyse, bestehend aus einem Reaktor (1) umfassend
eine pyrolytische Prozesskammer (11), die durch ein Gehäuse (6) begrenzt ist und sich von einem ersten Ende (7) bis zu einem zweiten Ende (8) erstreckt,
einen Einlass (3) in den Reaktor eines kontrollierten Durchfluss des zu behandelnden organischen Materials aus einer Zuführung (18), die sich in der Nähe des ersten Endes (7) befindet,
eine Förderschnecke (5) zum Vorschub des zu behandelnden organischen Materials vom ersten zum zweiten Ende der Kammer (11), die durch einen Motor (2) in der Kammer (11) rotierend bewegt wird,
eine Zuführung (9) eines kontrollierten Durchfluss eines inerten Gases vom ersten zum zweiten Ende der Kammer (11),
einen ersten Auslass (10) zum Abführen von Pyrolysedämpfen und -gasen aus dem Reaktor, der in der Nähe des zweiten Endes (8) angeordnet ist,
einen zweiten Auslass (12) zum Abführen von festen Pyrolyseprodukten aus der Kammer (11), der in der Nähe des zweiten Endes (8) angeordnet ist,
eine Temperatursensorverteilung (T1-T2) zur Überwachung der Temperatur der Dämpfe innerhalb der Prozesskammer (11) und/oder der Temperatur des Metallgehäuses (6) im Reaktor,
Heizmittel (4) für die Kammer (11),
eine Steuereinheit (15) zur Regelung der Heizmittel entsprechend den von mindestens einem der Sensoren (T1-T2) erfassten Temperaturen,
Oxidationsmittel-Einblaseinrichtungen (13, 14), die mit einer Oxidationsmittelquelle (30) außerhalb der Kammer (11) und mit Einblasstellen (31) innerhalb des Reaktors kommunizieren, um eine kontrollierte Menge Oxidationsmittel in die Prozesskammer (11) einzubringen
Wobei die Einblaseinrichtungen eine Hohlachsenschnecke (5) umfassen, in der eine perforierte Lanze (14) koaxial angeordnet ist und sich über die gesamte Länge der Kammer (11) erstreckt und mit einer Verteilung von Löchern (31) versehen ist, um einen kontrollierten Oxidationsprozess zwischen der eingeleiteten Luft und den Pyrolysedämpfen und den Gasen zu fördern.

2. Anlage nach Anspruch 1, wobei die Lanze (14) unabhängig von der Rotation der Schnecke (5) montiert ist.

3. Anlage nach Anspruch 1 oder 2, wobei die Lanze (14) abnehmbar und austauschbar montiert ist.

4. Anlage nach einem der vorhergehenden Ansprüche, wobei entlang des Reaktors mehrere Entnahmestellen (35) für das Pyrolysegas vorhanden sind.

5. Anlage nach einem der vorhergehenden Ansprüche, umfassend weitere Heizgeräte (16), die am Reaktorende (8) installiert sind, um eine mögliche Kondensation der abgesaugten Pyrolysedämpfe zu vermeiden.

6. Anlage nach einem der vorhergehenden Ansprüche, wobei die Zufuhr (9) des inerten Gases eine Verteilung von Einspritzstellen (17), die zwischen der Zufuhr (9) und der Einlassstelle (3) für das im Reaktor zu behandelnde Material umfasst.

7. Anlage nach einem der Ansprüche 2-6, wobei die Zufuhr (9) des inerten Gases eine Verbindung (9') zu den Einblasstellen (31) innerhalb des Reaktors der Leitung (14) aufweist.

8. Anlage nach einem der vorhergehenden Ansprüche, umfassend eine beheizte und wärmeisolierte Leitung (20) zur Weiterleitung der Pyrolysedämpfe und -gase zu einer Kondensationseinheit (21).

9. Anlage nach einem der vorhergehenden Ansprüche, umfassend einen Absaugventilator (22) für die Dämpfe und Gase, der stromabwärts der Kondensationseinheit angeordnet ist.

10. Anlage nach einem der vorhergehenden Ansprüche, umfassend ein System zur Förderung und Sammlung (23) der festen Pyrolyseprodukte.

11. Verfahren zur Pyrolyse einer Menge von organischem Material mittels eines Schneckenreaktors, nach einem der Ansprüche 1-10, umfassend die folgenden Schritte:
Drehen der Schnecke mit einer kontrollierten Geschwindigkeit
Einleiten des zu behandelnden organischen Materials in den Reaktor mit kontrollierter Strömungsrate,
Einleiten eines kontrollierten Stroms von inertem Gas in eine Prozesskammer des Reaktors,
Absaugen der Pyrolysedämpfe und -gase aus der Kammer,
Absaugen der festen Pyrolyseprodukte aus der Kammer,
Überwachen zumindest der Temperatur der Dämpfe in der Prozesskammer,
Erhitzen der Kammer auf eine kontrollierte Temperatur entsprechend der erfassten Dampftemperatur,
**dadurch gekennzeichnet, dass**
die Schnecke (5) und die Zufuhr (9) des inerten Gases einen Gleichstrom von organischem Material und von inertem Gas fördern, wobei die Kammer (11) teilweise mit Feststoffen gefüllt ist,
und dass zusätzlich eine kontrollierte Menge Oxidationsmittel in unterstöchiometrischem Wert in die Kammer eingeblasen wird, so dass ein kontrollierter partieller Oxidationsprozess zwischen dem eingebrachten Oxidationsmittel und den Pyrolysedämpfen und -gasen gefördert wird.

12. Verfahren nach Anspruch 11, wobei das organische Material eine Biomasse ist und der Pyrolyseprozess bei einer Temperatur zwischen 300 °C und 650 °C, einer Heizrate von weniger als 50 °C/min und einer maximalen Verweilzeit der Biomasse im Reaktor von maximal 60 min stattfindet.

## Revendications

1. Installation de traitement de matières organiques par pyrolyse, comprenant un réacteur (1) comprenant
une chambre de procédé de pyrolyse (11) délimitée par une enveloppe (6) et s'étendant d'une première extrémité (7) à une deuxième extrémité (8) ;
un point d'entrée (3) dans le réacteur d'un débit contrôlé de matière organique à traiter provenant d'une alimentation (18) située à proximité de ladite première extrémité (7) ;
une vis sans fin (5) pour l'avancement de la matière organique à traiter de ladite première extrémité à ladite deuxième extrémité de la chambre (11), entraînée en rotation à l'intérieur de la chambre (11) par un moteur (2) ;
un point d'alimentation (9) d'un débit contrôlé de gaz inerte de ladite première extrémité à ladite deuxième extrémité de la chambre (11) ;
une première sortie (10) pour l'extraction des vapeurs et gaz de pyrolyse du réacteur située à proximité de ladite deuxième extrémité (8) ;
une deuxième sortie (12) pour l'extraction des produits solides de pyrolyse de la chambre (11) située à proximité de ladite deuxième extrémité (8) ;
une distribution de capteurs de température (T1-T2) pour surveiller la température des vapeurs à l'intérieur de la chambre de traitement (11) et/ou la température de l'enveloppe métallique (6) à l'intérieur du réacteur,
un moyen de chauffage (4) pour ladite chambre (11),
une unité de commande (15) pour ajuster ledit moyen de chauffage en fonction des températures détectées par au moins un desdits capteurs (T1-T2) ;
des moyens de soufflage d'agent oxydant (13, 14) communiquant avec une source d'agent oxydant (30) externe à la chambre (11) et avec des points de soufflage (31) internes au réacteur pour introduire une quantité contrôlée d'oxydant dans ladite chambre de traitement (11) ;
dans lequel ces moyens de soufflage comprennent une vis sans fin à axe creux (5) à l'intérieur de laquelle est disposée coaxialement une lance perforée (14) s'étendant sur toute la longueur de ladite chambre (11) et pourvue d'une distribution de trous (31) afin de favoriser un processus d'oxydation contrôlé entre l'air introduit et les vapeurs et gaz de pyrolyse.

2. Installation selon la revendication 1, dans laquelle ladite lance (14) est montée indépendamment de la rotation de ladite vis sans fin (5).

3. Installation selon la revendication 1 ou 2, dans laquelle ladite lance (14) est montée de manière amovible et interchangeable.

4. Installation selon l'une quelconque des revendications précédentes, dans laquelle le réacteur comporte plusieurs points de prélèvement (35) des gaz de pyrolyse.

5. Installation selon l'une quelconque des revendications précédentes, comprenant des réchauffeurs supplémentaires (16) installés à l'extrémité terminale (8) du réacteur afin d'éviter une éventuelle condensation des vapeurs de pyrolyse extraites.

6. Installation selon l'une quelconque des revendications précédentes, dans laquelle ladite alimentation (9) en gaz inerte comprend une distribution de points d'injection (17) disposés entre ladite alimentation (9) et ledit point d'entrée (3) des matériaux à traiter dans le réacteur.

7. Installation selon l'une quelconque des revendications 2 à 6, dans laquelle ladite alimentation (9) en gaz inerte comprend un raccordement (9') auxdits points de soufflage (31) à l'intérieur du réacteur de ladite conduite (14).

8. Installation selon l'une quelconque des revendications précédentes, comprenant une conduite chauffée et isolée thermiquement (20) pour acheminer les vapeurs et les gaz de pyrolyse vers une unité de condensation (21).

9. Installation selon l'une quelconque des revendications précédentes, comprenant un ventilateur d'extraction (22) des vapeurs et des gaz situé en aval de ladite unité de condensation.

10. Installation selon l'une quelconque des revendications précédentes, comprenant un système de transport et de collecte (23) desdits produits solides de pyrolyse.

11. Procédé de pyrolyse d'une quantité de matière organique au moyen d'un réacteur à vis sans fin selon l'une des revendications 1 à 10, comprenant les étapes suivantes :
rotation de ladite vis sans fin à vitesse contrôlée,
introduction dans le réacteur d'un débit contrôlé de ladite matière organique à traiter,
introduction d'un débit contrôlé dudit gaz inerte dans une chambre de traitement du réacteur,
extraction des vapeurs et gaz de pyrolyse de la chambre,
extraction des produits solides de pyrolyse de la chambre,
surveillance au moins de la température des vapeurs à l'intérieur de la chambre de traitement,
chauffage de ladite chambre à une température contrôlée en fonction des températures des vapeurs détectées,
**caractérisé en ce que** la vis sans fin (5) et l'alimentation (9) en gaz inerte favorisent des écoulements à co-courant de matière organique et de gaz inerte avec remplissage partiel de la chambre (11) par la matière solide
et **en ce qu'**une étape de soufflage dans ladite chambre d'une quantité contrôlée d'agent oxydant à une valeur sous-stoechiométrique est prévue afin de favoriser un processus d'oxydation partielle contrôlée entre l'agent oxydant introduit et les vapeurs et gaz de pyrolyse.

12. Procédé selon la revendication 11, dans lequel ladite matière organique est une biomasse et ledit processus de pyrolyse se déroule à une température comprise entre 300 °C et 650 °C, avec une vitesse de chauffage inférieure à 50°C/min et un temps de séjour maximal de la biomasse dans le réacteur de 60 min maximum.
